(19) Europäisches Patentamt
European Patent Office
Office européen des brevets

(11) **EP 2 789 513 A1**

(12) **EUROPEAN PATENT APPLICATION**
published in accordance with Art. 153(4) EPC

(43) Date of publication:
15.10.2014 Bulletin 2014/42

(21) Application number: 11877084.1

(22) Date of filing: 09.12.2011

(51) Int Cl.:
*B60W 10/04* (2006.01)  *B60W 10/06* (2006.01)
*B60W 10/10* (2012.01)  *B60W 10/11* (2012.01)
*F02D 23/00* (2006.01)  *F02D 29/00* (2006.01)
*F02D 45/00* (2006.01)

(86) International application number:
PCT/JP2011/078620

(87) International publication number:
WO 2013/084365 (13.06.2013 Gazette 2013/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(71) Applicant: **Toyota Jidosha Kabushiki Kaisha**
Toyota-shi, Aichi 471-8571 (JP)

(72) Inventors:
• **OTA Keisuke**
Toyota-shi
Aichi 471-8571 (JP)

• **HASEGAWA Yoshio**
Toyota-shi
Aichi 471-8571 (JP)

(74) Representative: **TBK**
Bavariaring 4-6
80336 München (DE)

(54) **VEHICLE DRIVE APPARATUS CONTROL APPARATUS**

(57)    Provided is a vehicle drive apparatus control apparatus such that, in a vehicle provided with an engine having a supercharger and an automatic transmission, the driver can be spared the sense of lack of driving power while speed change can be implemented appropriately in a short time. An electronic control apparatus (52) increases the temporal increase ratio of the engine torque (Te) from a predetermined point in time (PTMup) during upshifting of an automatic transmission (12). Thus, compared with the case where the magnitude of the engine torque (Te) is linearly varied during upshifting from the start of upshifting to the end of upshifting, the engine torque (Te) during upshifting is decreased, so that upshifting can be implemented appropriately in a short time. Further, the electronic control apparatus (52) advances the predetermined point in time (PTMup) more as the operation state of the engine (10) is increasingly such that the response delay of supercharging by a supercharger (54) is increased. Thus, the driver can be spared the sense of lack of driving power.

FIG.6

**Description**

TECHNICAL FIELD

The present invention relates to a technique of improving drivability in a vehicle including an engine with a supercharger and an automatic transmission.

BACKGROUND ART

A control device of a vehicle drive device including an engine and an automatic transmission outputting power of the engine to drive wheels is conventionally well known. For example, this corresponds to a vehicle shift control device of Patent Document 1. The vehicle shift control device provides torque down control of reducing engine torque during an inertia phase of an upshift of the automatic transmission and provides return control of canceling the torque down control in the end period of the inertia phase. Since the engine torque is reduced during the inertia phase of the upshift, a preferred shift (upshift) can be realized in a short time. The reduction of the engine torque during the inertia phase of the upshift is preferable in terms of durability of clutches etc. included in the automatic transmission.

PRIOR ART DOCUMENTS

Patent Documents

Patent Document 1: Japanese Laid-Open Patent Publication No. 2007-176266
Patent Document 2: Japanese Laid-Open Patent Publication No. 5-280632
Patent Document 3: Japanese Laid-Open Patent Publication No. 62-253962
Patent Document 1: Japanese Laid-Open Patent Publication No. 2007-186098

SUMMARY OF THE INVENTION

Problem to Be Solved by the Invention

Some vehicles including the engine as a drive force source for running are disposed with a supercharger pressurizing intake air of the engine. It is conventionally known that a response delay in supercharging by the supercharger occurs in such a vehicle with a supercharger when engine torque is raised. Although a vehicle disclosed in Patent Document 1 does not include the supercharger, for example, when an upshift of the automatic transmission is performed in a vehicle including the supercharger, if the torque down control and the return control are provided in the same way as the vehicle shift control device of Patent Document 1, a preferable shift can be realized in the short time as compared to an upshift without the torque down control; however, a problem is supposed to occur that insufficiency of drive force is more easily felt by a driver at the end of the upshift due to the response delay in the supercharging. Such a problem is not a known problem.
The present invention was conceived in view of the situations and it is therefore an object of the present invention to provide a control device of a vehicle drive device capable of suppressing a feeling of insufficiency of drive force that may occur in a driver while realizing a preferable shift in a short time in a vehicle including an engine, a supercharger pressurizing intake air of the engine, and an automatic transmission. Means for Solving the Problem
To achieve the object, the first aspect of the invention provides a control device of a vehicle drive device (a) including an engine, a supercharger pressurizing intake air of the engine, and an automatic transmission outputting power of the engine to drive wheels, wherein (b) the control device makes a temporal rise rate of an engine torque larger from a predetermined time point during an upshift of the automatic transmission, wherein (c) the upshift is a shift with the engine torque after end of the upshift made larger than that before start of the upshift, and wherein (d) the predetermined time point is made earlier when a response delay of supercharging by the supercharger becomes larger.

Effects of the Invention

Consequently, since the engine torque during the upshift is reduced as compared to the case that the engine torque is linearly changed during the upshift from the level at the start of the upshift to the level at the end of the upshift, the preferred upshift can be realized in a short time. Since the predetermined time point is made earlier depending on a degree of the response delay in the supercharging, the insufficiency of the engine torque hardly occurs due to the response delay in the supercharging at the end of the upshift, which enables suppression of a feeling of insufficiency of drive force that may occur in a driver. The response delay in the supercharging varies in magnitude depending on a temporal change rate of an accelerator opening degree or an atmospheric pressure, for example.

The second aspect of the invention provides the control device of a vehicle drive device recited in the first aspect of the invention, wherein during the upshift the engine torque is raised in accordance with an assumed progress of the upshift from the predetermined time point and wherein the assumed progress of the upshift is an assumption that the upshift does not progress until the predetermined time point and that the upshift starts progressing from the predetermined time point. Consequently, the engine torque during the upshift can be easily reduced and the engine torque can be increased to the level at the end of the upshift by providing the control of the engine torque in accordance with the assumed progress of the upshift.

The third aspect of the invention provides the control device of a vehicle drive device recited in the second aspect of the invention, wherein (a) the control device controls the engine torque during the upshift based on a virtual shift progress rate virtually indicative of a shift progress rate of the upshift, wherein (b) the control device maintains the virtual shift progress rate at a value corresponding to the start of the upshift until the predetermined time point during the upshift and increases the virtual shift progress rate from the predetermined time point toward a value corresponding to the end of the upshift, thereby assuming that the upshift does not progress until the predetermined time point and that the upshift starts progressing from the predetermined time point. Consequently, the engine torque during the upshift can be reduced by using the virtual shift progress rate with the same control as the control of simply increasing the engine torque as the upshift progresses. Therefore, the reduction in a control load can be achieved.

The fourth aspect of the invention provides the control device of a vehicle drive device recited in the third aspect of the invention, wherein the control device causes the virtual shift progress rate to reach the value corresponding to the end of the upshift before the end of the upshift. Consequently, since the engine torque is controlled on the assumption that the upshift is completed before the actual end of the upshift, the insufficiency of drive force can more easily be prevented from occurring at the end of the upshift due to the response delay in the supercharging.

Preferably, (a) the control device controls the engine torque to attain a target engine torque that is a target value of the engine torque, (b) the control device temporarily makes the target engine torque larger as compared to the end of the upshift in a portion of the period from the predetermined time point until the end of the upshift during the upshift. Consequently, the insufficiency of drive force can more easily be prevented from occurring at the end of the upshift due to the response delay in the supercharging.

Preferably, the supercharger is an exhaust turbine supercharger driven by exhaust of the engine.

Preferably, the automatic transmission includes planetary gear devices, a plurality of engagement devices, and an upshift of the automatic transmission is a shift made by switching any of the engagement devices to be gripped.

Preferably, the upshift is an upshift during vehicle acceleration (power-on upshift).

BRIEF DESCRIPTION OF THE DRAWINGS

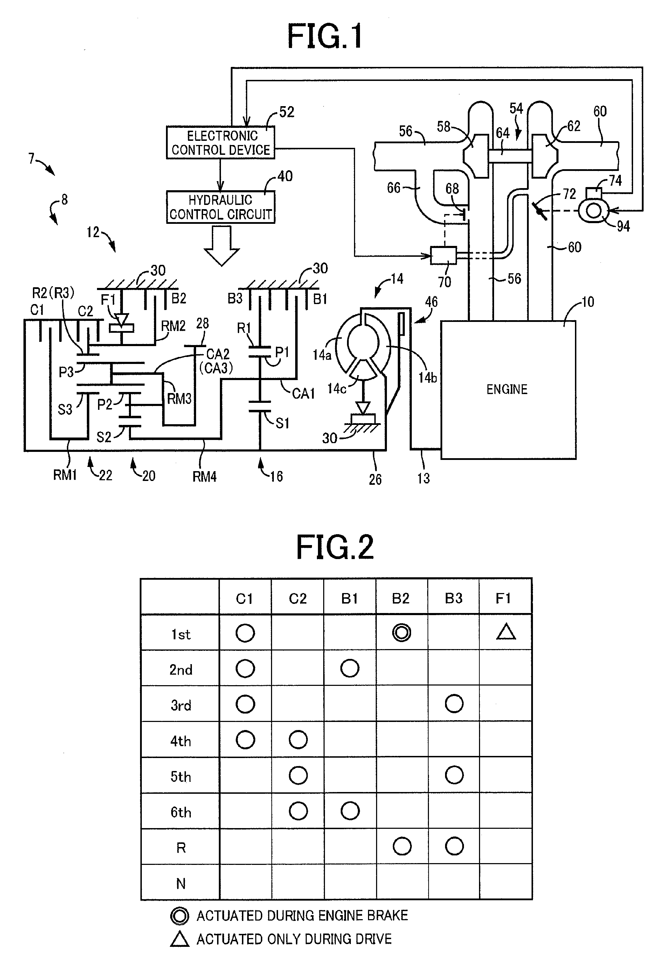

Fig. 1 is a schematic for explaining a configuration of a vehicle drive device included in a vehicle to which the present invention is preferably applied.

Fig. 2 is an operation table for explaining an operation state of engagement elements when a plurality of shift stages (gear stages) is established in an automatic transmission included in the vehicle drive device of Fig. 1.

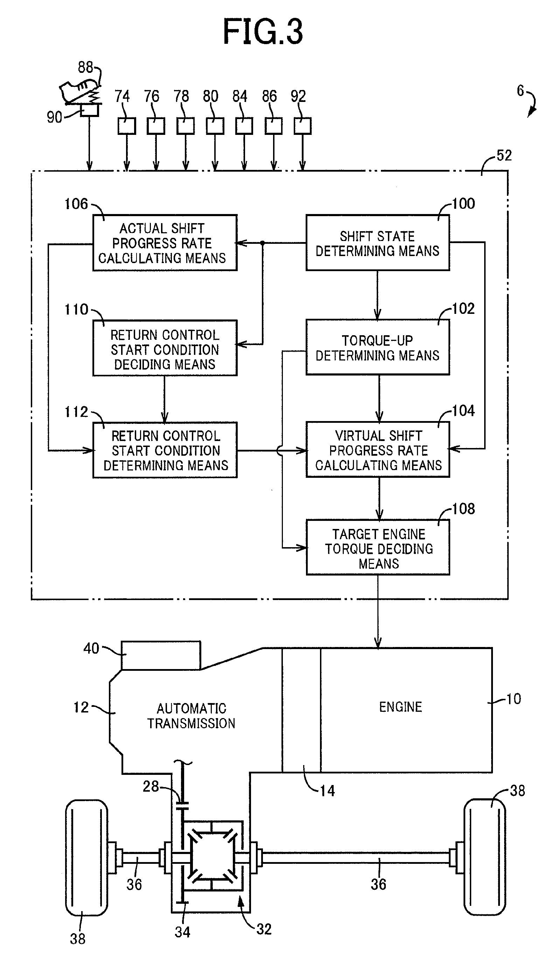

Fig. 3 is a diagram of exemplary illustration of signals input to an electronic control device for controlling the vehicle drive device of Fig. 1 and is a functional block diagram for explaining a main portion of the control function included in the electronic control device.

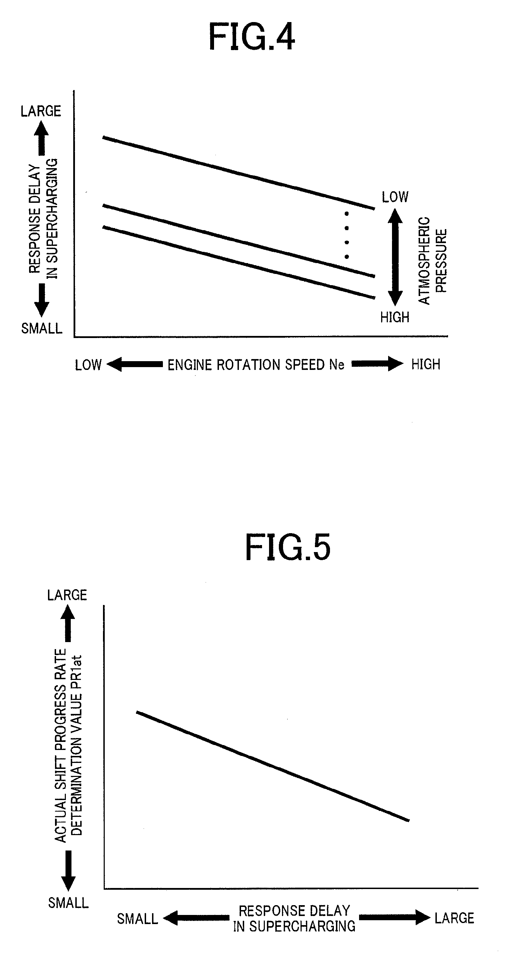

Fig. 4 is a diagram of relationship empirically obtained in advance between an operation state of an engine using the atmospheric pressure and an engine rotation speed as parameters and a response delay in a supercharging by a supercharger, and the relationship being used by the electronic control device of Fig. 3 for obtaining the response delay in the supercharging.

Fig. 5 is a diagram of relationship empirically set in advance between the response delay in the supercharging and an actual shift progress rate determination value, and the relationship being used by the electronic control device of Fig. 3 for deciding the actual shift progress rate determination value based on the response delay in the supercharging.

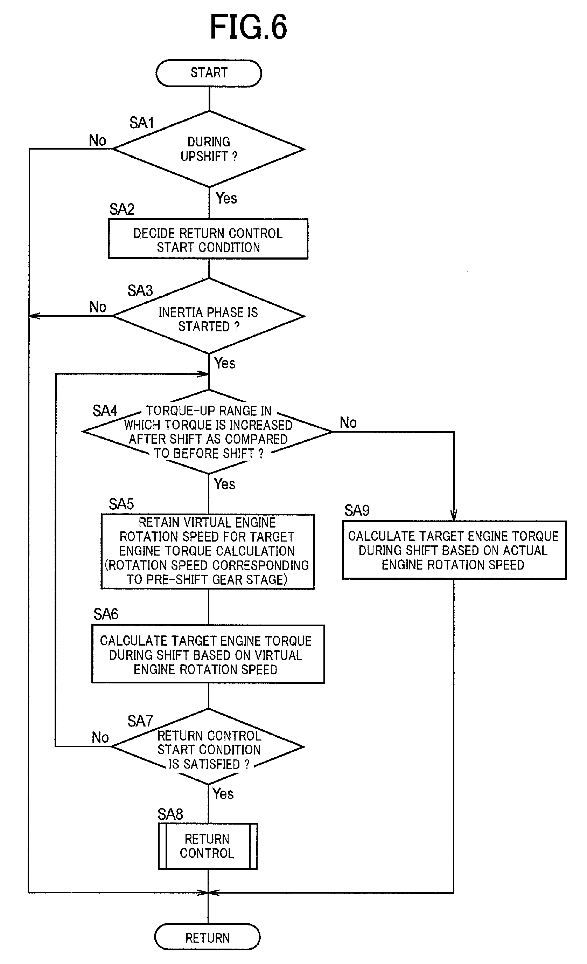

Fig. 6 is a flowchart for explaining a main portion of the control operation of the electronic control device of Fig. 3, i.e., the control operation of deciding the target engine torque during an upshift in the upshift of the automatic transmission making the engine torque after end of the shift larger than that before start of the shift.

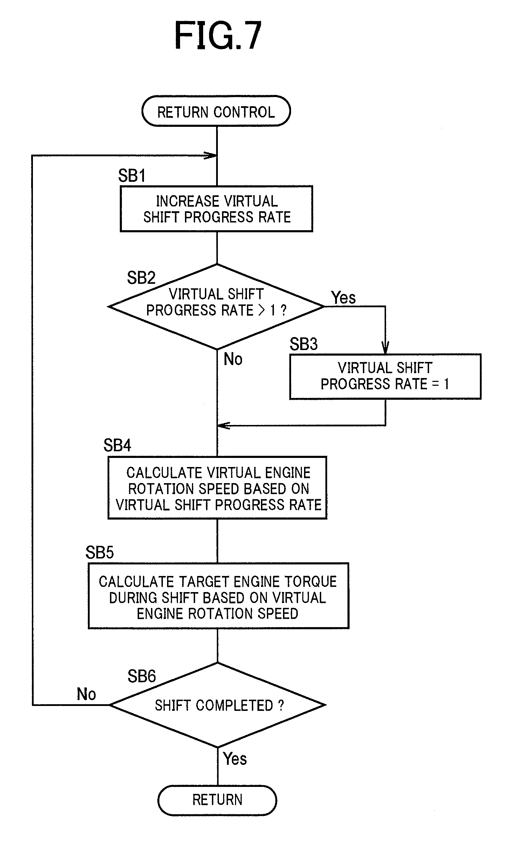

Fig. 7 is a flowchart of sub-routine executed at SA8 of Fig. 6.

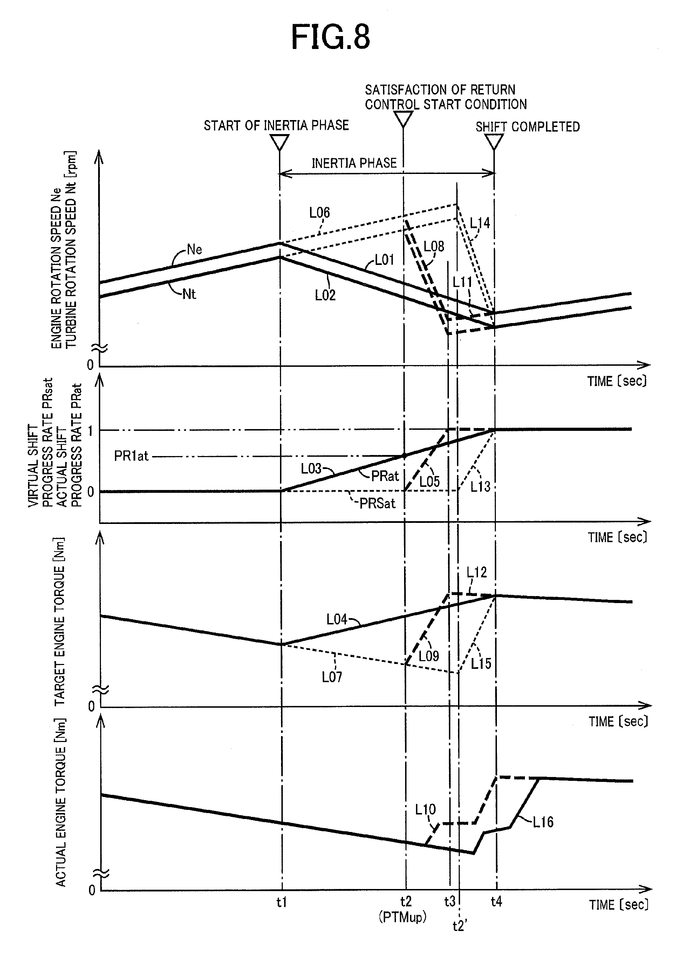

Fig. 8 is a time chart for explaining changes in the engine torque Te between before and after an upshift by taking as an example the case of an upshift of the automatic transmission performed when the accelerator opening degree is equal to or greater than a predetermined value during vehicle acceleration in the vehicle including the vehicle drive device of Fig. 1, i.e., the case that the power-on upshift is performed.

MODE FOR CARRYING OUT THE INVENTION

An example of the present invention will now be described in detail with reference to the drawings.

Example

Fig. 1 is a schematic for explaining a configuration of a vehicle drive device 7 included in a vehicle 6 to which the present invention is preferably applied. The vehicle 6 includes the vehicle drive device 7, a pair of drive wheels 38, etc., and the vehicle drive device 7 includes a vehicle power transmission device 8 (hereinafter referred to as a "power transmission device 8") and an engine 10. The power transmission device 8 is interposed between the engine 10 and the drive wheels 38 and includes an automatic transmission 12 and a torque converter 14 coupled to an output shaft 13 of the engine 10 and interposed between the engine 10 and the automatic transmission 12. The power transmission device 8 is preferably used in an FF vehicle in which the power transmission device 8 is equipped in the lateral direction of (transversely mounted on) the vehicle 6 (see Fig. 3).

The automatic transmission 12 makes up a portion of a power transmission path from the engine 10 to the drive wheels 38 (see Fig. 3) and outputs a power of the engine 10 toward the drive wheels 38. Therefore, the power of the engine 10 input to a transmission input shaft 26 is output from an output gear 28 toward the drive wheels 38. The automatic transmission 12 is a stepped transmission including a plurality of planetary gear devices 16, 20, 22, a plurality of hydraulic friction engagement devices (clutches C and brakes B), or specifically, five hydraulic friction engagement devices (C1, C2, B1, B2, B3), and an unidirectional clutch F1, and selectively establishing a plurality of shift stages (gear stages) by switching any of the multiple hydraulic friction engagement devices to be gripped. For example, the automatic transmission 12 performs a shift in accordance with a relationship (shift diagram) set in advance based on a vehicle state represented by a vehicle speed V and an accelerator opening degree Acc. In short, the automatic transmission 12 is a stepped transmission performing a so-called clutch-to-clutch shift frequently used in typical vehicles. Specifically, the first planetary gear device 16 of the automatic transmission 12 is of a single pinion type and includes a first sun gear S1, a first pinion gear P1, a first carrier CA1, and a first ring gear R1. The second planetary gear device 20 is of a double pinion type and includes a second sun gear S2, a second pinion gear P2, a third pinion gear P3, a second carrier CA2, and a second ring gear R2. The third planetary gear device 22 is of a single pinion type and includes a third sun gear S3, the third pinion gear P3, a third carrier CA3, and a third ring gear R3. The second planetary gear device 20 and the third planetary gear device 22 are formed as a Ravigneaux type planetary gear train with the second and third ring gears R2 and R3 made up of a common member and the third pinion gear P3 of the third planetary gear device 22 used also as one of the pinion gears of the second planetary gear device 20. As can be seen from Fig. 1, the transmission input shaft 26 acting as an input rotating member of the automatic transmission 12 is a turbine shaft of the torque converter 14. The output gear 28 acting as an output rotating member of the automatic transmission 12 functions as a differential drive gear meshed with a differential driven gear (large diameter gear) 34 of a differential gear device 32 (see Fig. 3). The output of the engine 10 is transmitted through the torque converter 14, the automatic transmission 12, the differential gear device 32, and a pair of axles 36 to a pair of the drive wheels (front wheels) 38 (see Fig. 3). The automatic transmission 12 is substantially symmetrically configured relative to a center line and the lower half from the center line is not depicted in Fig. 1.

Fig. 2 is an operation table for explaining an operation state of engagement elements when a plurality of shift stages (gear stages) is established in the automatic transmission 12. The operation table of Fig. 2 summarizes the relationship between the shift stages and the operation state of the clutches C1, C2, and the brakes B1 to B3 with "circles" indicative of engagement, a "double circle" indicative of engagement only during engine brake, and a "triangle" indicative of engagement only during drive. As depicted in Fig. 2, the automatic transmission 12 has six forward shift stages from a first speed gear stage "1st" to a sixth speed gear stage "6th" and a reverse shift stage of a reverse shift stage "R" established depending on the operation state of the engagement elements (the clutches C1, C2, and the brakes B1 to B3). Since the unidirectional clutch F1 is disposed in parallel with the brake B2 establishing the first shift stage "1st", the brake B2 may not necessarily be engaged at startup (at the time of acceleration). A shift ratio $\gamma at$ of the automatic transmission 12 is calculated based on an input rotation speed Nin that is a rotation speed Nin of the transmission input shaft 26 and an output rotation speed Nout that is a rotation speed Nout of the output gear 28 from an equation "shift ratio $\gamma at$=input rotation speed Nin/output rotation speed Nout".

The clutches C1, C2, and the brakes B 1 to B3 (hereinafter simply referred to as clutches C and brakes B if not particularly distinguished) are hydraulic friction engagement devices subjected to engagement control by hydraulic actuators, such as multiplate clutches and brakes, and have engaged and released states switched, and transient oil pressures at the time of engagement and release controlled, by excitation/non-excitation and current control of a linear solenoid valve disposed in a hydraulic control circuit 40 (see Fig. 1).

The torque converter 14 includes a pump impeller 14a coupled to the output shaft (crankshaft) 13 of the engine 10, a turbine impeller 14b coupled to the transmission input shaft 26 of the automatic transmission 12, and a stator impeller 14c coupled via the unidirectional clutch to a housing (transmission case) 30 of the automatic transmission 12 and is a fluid transmission device transmitting the drive force generated by the engine 10 through fluid to the automatic transmission 12. A lockup clutch 46 is a direct clutch disposed between the pump impeller 14a and the turbine impeller 14b and is put into an engaged state, a slip state, or a released state through hydraulic control etc. The lockup clutch 46 is put into the engaged state, or strictly, a completely engaged state, to integrally rotate the pump impeller 14a and the turbine impeller 14b.

A supercharger 54 is disposed in an intake system of the engine 10 and is a known exhaust turbine supercharger, i.e., a turbocharger, rotationally driven by exhaust of the engine 10 to pressurize intake air of the engine 10. Specifically, as depicted in Fig. 1, the supercharger 54 includes an exhaust turbine wheel 58 disposed in an exhaust pipe 56 of the engine 10 and rotationally driven by exhaust of the engine 10, an intake compressor wheel 62 disposed in an intake pipe 60 of the engine 10 and rotated by the exhaust turbine wheel 58 to compress intake air of the engine 10, an a rotation shaft 64 coupling the exhaust turbine wheel 58 and the intake compressor wheel 62. When the exhaust of the engine 10 sufficient for driving the supercharger 54 is led to the exhaust turbine wheel 58, the engine 10 operates in a supercharged state in which the engine 10 is supercharged by the supercharger 54. On the other hand, if the exhaust of the engine 10 led to the exhaust turbine wheel 58 is insufficient for driving the supercharger 54, the supercharger 54 is almost not driven and the engine 10 operates in a state of supercharging suppressed as compared to the supercharged state, i.e., a natural aspiration state (also referred to as NA state), which is a state of intake air equivalent to a natural aspirated engine without the supercharger 54.

Additionally, an exhaust bypass path 66 is disposed in parallel with an exhaust path in which the exhaust turbine wheel 58 in the exhaust pipe 56 is disposed, and a waist gate valve 68 is disposed that opens and closes the exhaust bypass path 66. The waist gate valve 68 has an opening degree $\theta wg$ of the waist gate valve 68 made continuously adjustable (hereinafter referred to as a waist gate valve opening degree $\theta wg$), and an electronic control device 52 controls an electric actuator 70 to continuously open and close the waist gate valve 68 by utilizing pressure in the intake pipe 60. For example, when the waist gate valve opening degree $\theta wg$ is larger, the exhaust of the engine 10 is more easily discharged through the exhaust bypass path 66 and, therefore, in the supercharged state of the engine 10, a downstream air pressure PLin of the intake compressor wheel 62 in the intake pipe 60, i.e., a supercharging pressure Pcmout (=PLin) of the supercharger 54, becomes lower when the waist gate valve opening degree $\theta wg$ is larger. As is generally known, the supercharging pressure Pcmout of the supercharger 54 becomes lower when an opening degree $\theta th$ of an electronic throttle valve 72, i.e., a throttle opening degree $\theta th$, is smaller in the supercharged state of the engine 10. The electronic throttle valve 72 is a valve mechanism disposed downstream of the intake compressor wheel 62 in the intake pipe 60 of the engine 10 to adjust an intake air amount of the engine 10 and is actuated to open/close by an electric throttle actuator 94. Unless otherwise noted, the waist gate valve 68 is assumed to be in a completely closed state in the description of this example.

Fig. 3 is a diagram of exemplary illustration of signals input to the electronic control device 52 acting as a control device for controlling the vehicle drive device 7 of this example and is a functional block diagram for explaining a main portion of the control function included in the electronic control device 52. The electronic control device 52 includes a so-called microcomputer consisting of a CPU, a ROM, a RAM, an I/O interface, etc., executes signal processes in accordance with programs stored in advance in the ROM, while utilizing a temporary storage function of the RAM, to provide vehicle control related to the engine 10 and the automatic transmission 12. For example, the electronic control device 52 acts as a vehicle engine control device controlling the engine 10.

The electronic control device 52 is supplied, from sensors, switches, etc. as depicted in Fig. 3, with a signal indicative of a throttle opening degree $\theta th$ of the engine 10 detected by a throttle opening degree sensor 74, a signal indicative of an upstream air pressure PHin of the intake compressor wheel 62 in the intake pipe 60 (hereinafter referred to as a compressor upstream intake pressure PHin) detected by a first intake sensor 76, a signal indicative of the downstream air pressure PLin of the intake compressor wheel 62 in the intake pipe 60 (hereinafter referred to as a compressor downstream intake pressure PLin) detected by a second intake sensor (supercharging pressure sensor) 78, a signal indicative of vehicle longitudinal acceleration ACL that is acceleration ACL in a vehicle running direction, i.e., a vehicle longitudinal direction, detected by an acceleration sensor 80, a signal indicative of an engine rotation speed Ne detected by an engine rotation speed sensor 84, a signal indicative of the rotation speed Nout of the output gear 28 detected by an output rotation speed sensor 86, a signal from an accelerator opening degree sensor 90 indicative of the accelerator opening degree Acc that is an operation amount of an accelerator pedal 88 corresponding to a request output of a driver, a signal from a turbine rotation speed sensor 92 indicative of a rotation speed Nt of the turbine impeller 14b (hereinafter referred to as "turbine rotation speed Nt"), i.e., the rotation speed Nin (=Nt) of the transmission input shaft 26, etc. Since the rotation speed Nout of the output gear 28 corresponds to the vehicle speed V, the output rotation speed sensor 86 also acts as a vehicle speed sensor detecting the vehicle speed V. Since the compressor upstream intake pressure PHin is the same as an atmospheric pressure Pair, the first intake sensor 76 also acts as an atmospheric pressure sensor detecting the atmospheric pressure Pair.

The electronic control device 52 supplies various output signals to the devices disposed on the vehicle 6. For example, the electronic control device 52 sequentially calculates a target engine torque Tet that is a target value of an engine torque Te from relationship empirically set in advance based on the accelerator opening degree Acc, the vehicle speed V, the engine rotation speed Ne, etc. The electronic control device 52 provides throttle control for adjusting the throttle opening degree θth through the electric throttle actuator 94 so that the engine torque Te attains the target engine torque Tet, i.e., the engine torque Te matches the target engine torque Tet. The electronic control device 52 basically increases the throttle opening degree θth as the accelerator opening degree Acc increases in the throttle control. Although the target engine torque Tet may be calculated by a target engine torque deciding means 108 during an upshift of the automatic transmission 12 as described later, the throttle opening degree θth is sequentially adjusted even in such a case so that the engine torque Te attains the target engine torque Tet. Although the engine torque Te may directly be detected by a torque sensor, the engine torque Te can be calculated from relationship empirically obtained in advance based on the engine rotation speed Ne and the throttle opening degree θth if the engine 10 is in a steady state.

As depicted in Fig. 3, the electronic control device 52 functionally includes a shift state determining means 100 that is a shift state determining portion, a torque-up determining means 102 that is a torque-up determining portion, a virtual shift progress rate calculating means 104 that is a virtual shift progress rate calculating portion, an actual shift progress rate calculating means 106 that is an actual shift progress rate calculating portion, the target engine torque deciding means 108 that is a target engine torque deciding portion, a return control start condition deciding means 110 that is a return control start condition deciding portion, and a return control start condition determining means 112 that is a return control start condition determining portion.

The shift state determining means 100 determines whether the automatic transmission 12 is during an upshift. If the automatic transmission 12 is during the upshift, the shift state determining means 100 determines whether an inertia phase of the upshift is started. Whether the inertia phase of the upshift is started can be determined from, for example, a change in the input rotation speed Nin of the automatic transmission 12, or a control signal of a linear solenoid valve in the hydraulic control circuit 40 engaging or releasing the clutches C or the brakes B of the automatic transmission 12. The end time of the inertia phase of the upshift is coincident with the end time of the upshift and is, for example, the time of completion of the engagement operation of the clutches C or the brakes B engaged in the upshift.

If the shift state determining means 100 determines that the automatic transmission 12 is during an upshift, the torque-up determining means 102 determines whether the engine torque Te after end of the upshift is made larger than that before start of the upshift. If the engine torque Te is not changed before and after the upshift, the drive force of the vehicle 6 is reduced in accordance with reduction in the shift ratio γat due to the upshift. Therefore, to avoid the reduction in the drive force due to the upshift, the engine torque Te must be made larger after end of the upshift than that before start of the upshift. Thus, to control the engine torque Te such that the reduction in the drive force due to the upshift is avoided, a torque-up range is preliminarily empirically obtained and set that represents a range of a vehicle state in which the engine torque Te is made larger after an upshift than that before the upshift. The torque-up determining means 102 utilizes the torque-up range to determine that the engine torque Te after end of the upshift is made larger than that before start of the upshift if a vehicle state before start of the upshift falls within the torque-up range. For example, in the case of an upshift during coasting without depressing the accelerator pedal 88, it is believed that a driver does not become aware of insufficiency of drive force even when the drive force of the vehicle 6 is reduced due to the upshift. On the other hand, in the case of an upshift when the accelerator opening degree Acc is equal to or greater than a predetermined value, i.e., a power-on upshift that is an upshift during vehicle acceleration, if the drive force of the vehicle 6 is reduced due to the upshift, it is believed that a driver becomes aware of insufficiency of drive force. Therefore, in the power-on upshift, the engine torque Te is made larger after end of the upshift than that before start of the upshift by the electronic control device 52. The torque-up range and the vehicle state subject to the determination of whether the vehicle state falls into the torque-up range are decided from such an example by using the accelerator opening degree Acc and the vehicle speed V as parameters, for example. The torque-up range includes, for example, the vehicle state in which the power-on upshift is performed, and does not include the vehicle state during the coasting.

If the shift state determining means 100 determines that the automatic transmission 12 is during an upshift and that the inertia phase is started and the torque-up determining means 102 determines that the engine torque Te after end of the upshift is made larger than that before start of the upshift, the virtual shift progress rate calculating means 104 sequentially decides a virtual shift progress rate PRSat virtually indicative of a progress rate of a shift of the automatic transmission 12 until end of the upshift. In this example, the virtual shift progress rate PRSat has a value of zero corresponding to the start of the shift and a value of one corresponding to the end of the shift. Specifically, the virtual shift progress rate calculating means 104 maintains the virtual shift progress rate PRSat at the level corresponding to the start of the upshift (PRSat=0) until a predetermined time point PTMup during the upshift. The virtual shift progress rate calculating means 104 increases the virtual shift progress rate PRSat toward one from the predetermined time point PTMup. In this way, the virtual shift progress rate calculating means 104 assumes that the upshift does not progress until the predetermined time point PTMup and that the upshift starts progressing from the predetermined time point PTMup, separately from the actual progress of the upshift. The predetermined time point PTMup will be described later.

If the shift state determining means 100 determines that the automatic transmission 12 is during an upshift and that the inertia phase is started, the actual shift progress rate calculating means 106 sequentially detects the input rotation speed Nin (=Nt) and the output rotation speed Nout of the automatic transmission 12 and sequentially calculates an actual progress rate of a shift of the automatic transmission 12, i.e., an actual shift progress rate PRat, based on the input rotation speed Nin and the output rotation speed Nout. Specifically, the actual shift progress rate calculating means 106 calculates the actual shift progress rate PRat of the automatic transmission 12 from the following Equation (1). Therefore, the actual shift progress rate PRat has a value of zero at the start of the inertia phase of a shift, continuously increases as the shift progresses, and becomes one at the end of the shift. In Equation (1), $\gamma$at1 is the shift ratio $\gamma$at at a pre-shift gear stage of an upshift, i.e., a pre-shift shift ratio (pre-shift gear ratio), and $\gamma$at2 is the shift ratio $\gamma$at at a post-shift gear stage of an upshift, i.e., a post-shift shift ratio (post-shift gear ratio). The pre-shift shift ratio $\gamma$at1 and the post-shift shift ratio $\gamma$at2 are predefined before start of the upshift.

$$PRat=(Nout\times\gamma at1-Nin)/\{Nout\times(\gamma at1-\gamma at2)\} \quad \ldots(1)$$

The target engine torque deciding means 108 sequentially decides the target engine torque Tet during an upshift of the automatic transmission 12. Specifically, if the torque-up determining means 102 determines that the engine torque Te after end of the upshift is made larger than that before start of the upshift, the target engine torque deciding means 108 sequentially acquires the virtual shift progress rate PRSat from the virtual shift progress rate calculating means 104 and decides the target engine torque Tet based on the virtual shift progress rate PRSat. Therefore, the throttle control, i.e., the control of the engine torque Te, is provided based on the virtual shift progress rate PRSat. On the other hand, if the torque-up determining means 102 determines that the engine torque Te after end of the upshift is not made larger than that before start of the upshift, the target engine torque deciding means 108 decides the target engine torque Tet based on the engine rotation speed Ne sequentially detected by the engine rotation speed sensor 84. Therefore, the throttle control is provided based on the actual engine rotation speed Ne.

Specifically, if the target engine torque Tet is decided based on the virtual shift progress rate PRSat, the target engine torque deciding means 108 first calculates a virtual engine rotation speed NSe from the following Equation (2) based on the virtual shift progress rate PRSat. The virtual engine rotation speed NSe is different from the actual engine rotation speed Ne and is a virtual engine rotation speed calculated based on the virtual shift progress rate PRSat. In Equation (2), Nslp is a slip rotation speed of the torque converter 14 and is calculated from the following Equation (3) based on the engine rotation speed Ne sequentially detected by the engine rotation speed sensor 84 and the turbine rotation speed Nt sequentially detected by the turbine rotation speed sensor 92. Nout is a rotation speed of the output gear 28 sequentially detected by the output rotation speed sensor 86.

$$NSe=Nslp+Nout\times\{(1-PRSat)\times\gamma at1+PRsat\times\gamma at2\} \quad \ldots(2)$$

$$Nslp=Ne-Nt \quad \ldots(3)$$

After calculating the virtual engine rotation speed NSe from Equation (2), the target engine torque deciding means 108 uses the target engine torque Tet at the start of the upshift as a standard to calculate the target engine torque Tet during the upshift based on the virtual engine rotation speed NSe. Specifically, the target engine torque deciding means 108 calculates the target engine torque Tet based on the virtual engine rotation speed NSe from relationship empirically set in advance such that the target engine torque Tet is more increased when the virtual engine rotation speed NSe becomes lower, so as to suppress variation in drive force due to the upshift of the automatic transmission 12. For example, the relationship empirically set in advance for calculating the target engine torque Tet is defined such that virtual engine output calculated from the virtual engine rotation speed NSe and the target engine torque Tet is made constant from start to end of an upshift, i.e., such that the product of the virtual engine rotation speed NSe and the target engine torque Tet is maintained from start to end of an upshift.

On the other hand, if the target engine torque Tet is decided based on the engine rotation speed Ne detected by the engine rotation speed sensor 84, the target engine torque deciding means 108 calculates the target engine torque Tet based on the actual engine rotation speed Ne from relationship empirically set in advance such that the target engine torque Tet is more increased when the engine rotation speed Ne becomes lower so as to suppress variation in drive force due to the upshift of the automatic transmission 12. For example, the relationship empirically set in advance for calculating the target engine torque Tet is defined such that the product of the engine rotation speed Ne and the target engine torque Tet is maintained from start to end of an upshift as in the case of deciding the target engine torque Tet based on the virtual shift progress rate PRSat.

If the shift state determining means 100 determines that the automatic transmission 12 is during an upshift, the return control start condition deciding means 110 decides a condition of increasing the virtual shift progress rate PRSat from zero toward one, i.e., a return control start condition that is a condition defining the predetermined time point PTMup. Specifically, the return control start condition represents that the actual shift progress rate PRat acquired from the actual shift progress rate calculating means 106 is equal to or greater than a predetermined actual shift progress rate determination value PR1at, and the return control start condition is satisfied when the actual shift progress rate PRat is equal to or greater than the actual shift progress rate determination value PR1at. Therefore, deciding the return control start condition is to decide the actual shift progress rate determination value PR1at.

In particular, to decide the return control start condition, the return control start condition deciding means 110 first obtains magnitude of a response delay in supercharging by the supercharger 54 based on an operation state of the engine 10 at the start of the shift of the automatic transmission 12. For example, relationship is empirically obtained and set in advance between the operation state of the engine 10 using the atmospheric pressure Pair detected by the first intake sensor 76 and the engine rotation speed Ne detected by the engine rotation speed sensor 84 as parameters and the response delay in the supercharging as depicted in Fig. 4. The return control start condition deciding means 110 obtains the magnitude of the response delay in the supercharging from the relationship depicted in Fig. 4 based on the atmospheric pressure Pair and the engine rotation speed Ne at the start of the shift. As depicted in Fig. 4, the relationship between the operation state of the engine 10 and the response delay in the supercharging is defined such that when the engine rotation speed Ne at the start of the shift is lower or when the atmospheric pressure Pair at the start of the shift is higher, the response delay in the supercharging becomes smaller. The response delay in the supercharging is a temporal delay in the rise of the supercharging pressure Pcmout of the supercharger 54 as compared to the time of increase in the throttle opening degree $\theta$th when the throttle opening degree $\theta$th is increased. The response delay in the supercharging predicted from the relationship of Fig. 4 is a response delay in supercharging when the engine torque Te is increased in the end period of the upshift.

Once magnitude of the response delay in the supercharging is obtained by using Fig. 4, the return control start condition deciding means 110 decides the actual shift progress rate determination value PR1at based on the magnitude of the response delay in the supercharging. As a result, the return control start condition is decided. For example, relationship is empirically obtained and set preliminarily as depicted in Fig. 5 such that when the response delay in the supercharging acquired from Fig. 4 is larger, the actual shift progress rate determination value PR1at becomes smaller, and the return control start condition deciding means 110 decides the actual shift progress rate determination value PR1at from the relationship depicted in Fig. 5. The relationship depicted in Fig. 5 is empirically obtained so as to prevent a driver from feeling insufficiency of drive force immediately after the end of the upshift due to the response delay in the supercharging and to set the actual shift progress rate determination value PR1at as large as possible. Since the actual shift progress rate determination value PR1at is decided from the relationships depicted in Figs. 4 and 5, when the engine 10 is in the operation state making a response delay in supercharging by the supercharger 54 larger, the return control start condition deciding means 110 makes the predetermined time point PTMup earlier.

The return control start condition determining means 112 acquires the return control start condition decided by the return control start condition deciding means 110. If the torque-up determining means 102 determines that the engine torque Te after end of the upshift is made larger than that before start of the upshift, the return control start condition determining means 112 sequentially determines whether the return control start condition is satisfied. In other words, the return control start condition determining means 112 sequentially determines whether the actual shift progress rate PRat is equal to or greater than the actual shift progress rate determination value PR1at.

If the return control start condition determining means 112 determines that the actual shift progress rate PRat becomes equal to or greater than the actual shift progress rate determination value PR1at, the virtual shift progress rate calculating means 104 starts increasing the virtual shift progress rate PRSat toward one. Therefore, the predetermined time point PTMup, i.e., the time point of starting increasing the virtual shift progress rate PRSat toward one, is the time point when the actual shift progress rate PRat becomes equal to or greater than the actual shift progress rate determination value PR1at. When the virtual shift progress rate PRSat is increased from the predetermined time point PTMup, the virtual shift progress rate PRSat is increased to reach one at least before the actual shift progress rate PRat becomes one. For example, the virtual shift progress rate calculating means 104 decides a temporal increase rate of the virtual shift progress rate PRSat based on a change in the actual shift progress rate PRat and causes the virtual shift progress rate PRSat to reach a value (=1) corresponding to the end of the upshift before the end of the upshift, i.e., before the actual shift progress rate PRat reaches one. For example, the virtual shift progress rate PRSat is linearly increased from the predetermined time point PTMup relative to an elapsed time.

When the virtual shift progress rate PRSat is increased from the predetermined time point PTMup in this way, the target engine torque deciding means 108 deciding the target engine torque Tet based on the virtual shift progress rate PRSat raises the target engine torque Tet in accordance with the increase in the virtual shift progress rate PRSat. In other words, since the engine torque Te is controlled to attain the target engine torque Tet, it can be said that the target engine torque deciding means 108 raises the engine torque Te from the predetermined time point PTMup in accordance with the progress of the upshift assumed from the virtual shift progress rate PRSat. Since the virtual shift progress rate PRSat is brought closer to the actual shift progress rate PRat from the predetermined time point PTMup, it can also be said that the virtual shift progress rate calculating means 104 and the target engine torque deciding means 108 provide return control causing the assumed progress of the upshift to return and come closer to the actual progress, from the predetermined time point PTMup. In other words, the virtual shift progress rate calculating means 104 and the target engine torque deciding means 108 have a function as a return control providing means providing the return control.

Fig. 6 is a flowchart for explaining a main portion of the control operation of the electronic control device 52, i.e., the control operation of deciding the target engine torque Tet during an upshift in the upshift of the automatic transmission 12 making the engine torque Te after end of the shift larger than that before start of the shift, and is repeatedly executed with an extremely short cycle time, for example, on the order of a few msec to a few tens of msec. Fig. 7 is a flowchart of sub-routine executed at SA8 of Fig. 6. The control operations depicted in Figs. 6 and 7 are performed solely or concurrently with another control operation.

First, at step (hereinafter, "step" will be omitted) SA1, it is determined whether the automatic transmission 12 is during an upshift. If the determination of SA1 is affirmative, i.e., if the automatic transmission 12 is during an upshift, the operation goes to SA2. On the other hand, if the determination of SA1 is negative, this flowchart is terminated. SA1 corresponds to the shift state determining means 100.

At SA2 corresponding to the return control start condition deciding means 110, the return control start condition is decided. In particular, the actual shift progress rate determination value PR1at is decided. SA2 is followed by SA3.

At SA3 corresponding to the shift state determining means 100, it is determined whether the inertia phase of the upshift is started. If the determination of SA3 is affirmative, i.e., if the inertia phase is started, the operation goes to SA4. On the other hand, if the determination of SA3 is negative, this flowchart is terminated.

At SA4 corresponding to the torque-up determining means 102, it is determined whether the engine torque Te after end of the upshift is made larger than that before start of the upshift. Specifically, if the vehicle state before start of the upshift falls within the torque-up range empirically set in advance, it is determined that the engine torque Te after end of the upshift is made larger than that before start of the upshift. If the determination of SA4 is affirmative, i.e., if the engine torque Te after end of the upshift is made larger than that before start of the upshift, the operation goes to SA5. On the other hand, if the determination of SA4 is negative, the operation goes to SA9. For example, the determination of SA4 is affirmative in the case of the power-on upshift, while the determination of SA4 is negative in the case of the upshift during coasting.

At SA5 corresponding to the virtual shift progress rate calculating means 104 and the target engine torque deciding means 108, the virtual shift progress rate PRSat is decided. At SA5, the virtual shift progress rate PRSat is set to the value corresponding to the start of the shift (PRSat=0). The virtual engine rotation speed NSe is then calculated from Equation (2) based on the virtual shift progress rate PRSat. Therefore, the virtual engine rotation speed NSe calculated at SA5 is a rotation speed corresponding to the engine rotation speed Ne when it is assumed that the shift ratio $\gamma$at of the automatic transmission 12 is maintained at the pre-shift gear stage. SA5 is followed by SA6.

At SA6 corresponding to the target engine torque deciding means 108, the target engine torque Tet is calculated based on the virtual engine rotation speed NSe calculated at SA5. The target engine torque Tet is more increased when the virtual engine rotation speed NSe becomes lower. Conversely, the target engine torque Tet is more reduced when the virtual engine rotation speed NSe becomes higher. SA6 is followed by SA7.

At SA7 corresponding to the return control start condition determining means 112, it is determined whether the return control start condition decided at SA2 is satisfied. In particular, the return control start condition is satisfied when the actual shift progress rate PRat is equal to or greater than the actual shift progress rate determination value PR1at. If the determination of SA7 is affirmative, i.e., if the return control start condition is satisfied, the operation goes to SA8. On the other hand, if the determination of SA7 is negative, the operation goes to SA4.

At SA8, the return control is started that causes the progress of the upshift assumed by using the virtual shift progress rate PRSat to return and come closer to the actual progress of the upshift. In other words, the virtual shift progress rate PRSat is increased. Specifically, the sub-routine of Fig. 7 is started from SB1.

At SB1, the virtual shift progress rate PRSat is increased toward one at a predetermined temporal increase rate. In this case, the virtual shift progress rate PRSat is increased to reach one at least before the actual shift progress rate PRat becomes one. Since a shift time required for a shift of the automatic transmission 12 is determined at the shift start time, the shift end time is preliminarily known based on the shift start time and, therefore, the predetermined temporal increase rate can be defined in advance. SB 1 is followed by SB2.

At SB2, it is determined whether the virtual shift progress rate PRSat increased at SB1 is larger than one. If the determination of SB2 is affirmative, i.e., if the virtual shift progress rate PRSat is larger than one, the operation goes to SB3 and, after the virtual shift progress rate PRSat is set to one at SB3, the operation goes to SB4. On the other hand, if the determination of SB2 is negative, the operation goes to SB4 without going through SB3. SB 1 to SB3 correspond to the virtual shift progress rate calculating means 104.

At SB4 corresponding to the target engine torque deciding means 108, the virtual engine rotation speed NSe is calculated from Equation (2) based on the virtual shift progress rate PRSat. SB4 is followed by SB5.

At SB5 corresponding to the target engine torque deciding means 108, as is the case with SA6, the target engine torque Tet is calculated based on the virtual engine rotation speed NSe calculated at SB4. SB5 is followed by SB6.

At SB6 corresponding to the shift state determining means 100, it is determined whether the upshift of the automatic transmission 12 is completed. If the determination of SB6 is affirmative, i.e., if the upshift is completed, the operation returns to the flowchart of Fig. 6 and goes to the next step of SA8. In other words, the flowchart of Fig. 6 is terminated. On the other hand, if the determination of SB6 is negative, the operation goes to SB 1.

Returning to Fig. 6, at SA9 corresponding to the target engine torque deciding means 108, the target engine torque Tet is decided based on the actual engine rotation speed Ne.

Fig. 8 is a time chart for explaining changes in the engine torque Te between before and after an upshift by taking as an example the case of an upshift of the automatic transmission 12 performed when the accelerator opening degree Acc is equal to or greater than a predetermined value during vehicle acceleration, i.e., the case that the power-on upshift is performed. The upshift of the automatic transmission 12 performed in Fig. 8 is a shift performed by switching the clutches C or the brakes B to be gripped included in the automatic transmission 12, i.e., the clutch-to-clutch shift, such as a shift from the third speed to the fourth speed of the automatic transmission 12, for example.

Time t1 of Fig. 8 indicates the start time point of an inertia phase in the upshift of the automatic transmission 12 and time t4 indicates the end time point of the inertia phase, i.e., the end time point of the upshift. Therefore, in Fig. 8, as indicated by a solid line L01 and a solid line L02, the actual engine rotation speed Ne and the actual turbine rotation speed Nt gradually decrease from time t1 to time t4 as the shift progresses. The actual shift progress rate PRat calculated from Equation (1) gradually increases from time t1 to time t4 as indicated by a solid line L03 from zero to one. The shift state determining means 100 determines that the automatic transmission 12 is during an upshift before time t1 and that the inertia phase of the upshift is started at time t1. Since the upshift is the power-on upshift, the torque-up determining means 102 determines at time t1 that the engine torque Te after end of the upshift is made larger than that before start of the upshift. The return control start condition deciding means 110 decides the actual shift progress rate determination value PR1at at time t1 at the latest.

A solid line L04 of Fig. 8 indicates a change in the target engine torque Tet when it is assumed that the target engine torque Tet simply increases in accordance with a change in the actual engine rotation speed Ne (solid line L01) from a level at the start of the inertia phase (time t1) to a level at the end of the inertia phase (time t4).

Time t2 of Fig. 8 indicates the time point when the actual shift progress rate PRat increasing from time t1 becomes equal to or greater than the actual shift progress rate determination value PR1at. Therefore, the return control start condition determining means 112 determines at time t2 that the return control start condition is satisfied. Thus, the virtual shift progress rate calculating means 104 increases the virtual shift progress rate PRSat, which is set to zero until time t2, toward one from time t2 in the end period of the inertia phase (shift end period) as indicated by a broken line L05. Therefore, in Fig. 8, time t2 corresponds to the predetermined time point PTMup. Time t3 indicates the time point when the virtual shift progress rate PRSat reaches one and the virtual shift progress rate PRSat is kept at one from time t3 to the end of the shift (time t4).

As described above, the virtual shift progress rate PRSat is set to zero between time t1 and time t2 to assume that the upshift of the automatic transmission 12 does not progress unlike the actual progress, while the virtual shift progress rate PRSat is increased from zero to one from time t2 to time t3 to assume that the upshift of the automatic transmission 12 progresses, and the virtual engine rotation speed NSe is calculated by the target engine torque deciding means 108 in accordance with the assumption. Therefore, between time t1 and time t2, the virtual engine rotation speed NSe is calculated based on the vehicle speed V, i.e., the output rotation speed Nout, during acceleration with the shift ratio γat maintained at that before start of the upshift and thus gradually rises as indicated by a broken line L06. The target engine torque Tet gradually decreases as indicated by a broken line L07 in accordance with the rising virtual engine rotation speed NSe.

Between time t2 and time t3, the shift ratio γat of the automatic transmission 12 virtually changes from a level before the shift to a level after the shift in accordance with the increase in the virtual shift progress rate PRSat and, therefore, the virtual engine rotation speed NSe decreases as indicated by a broken line L08 in accordance with the virtual decrease in the shift ratio γat. The target engine torque Tet increases as indicated by a broken line L09 in accordance with the decreasing virtual engine rotation speed NSe. The electronic control device 52 decides the target engine torque Tet in this way during the upshift of the automatic transmission 12 to make a temporal rise rate of the engine torque Te larger from time t2 (the predetermined time point PTMup). As a result, the actual engine torque Te starts increasing to follow the target engine torque Tet as indicated by a broken line L10 with a small delay from time t2 because of a response delay in supercharging by the supercharger 54. The actual engine torque Te reaches the target engine torque Tet before time t4, which is the upshift end time point, as indicated by the broken line L10, for example.

Since the virtual shift progress rate PRSat is one between time t3 and time t4, the virtual engine rotation speed NSe is calculated based on the vehicle speed V, i.e., the output rotation speed Nout, during acceleration with the shift ratio γat of the automatic transmission 12 considered as the level after end of the upshift, the virtual engine rotation speed NSe gradually rises as indicated by a broken line L11. The target engine torque Tet gradually decreases as indicated by a broken line L12 in accordance with the rising virtual engine rotation speed NSe. Therefore, in the time chart of the target engine torque Tet of Fig. 8, the target engine torque Tet at time t3 is larger than that at time t4. In other words, the target engine torque deciding means 108 temporarily makes the target engine torque Tet larger than that at the end of the upshift (time t4) in a portion of the period from the predetermined time point PTMup until the end of the upshift (time t2 to time t4) during the upshift of the automatic transmission 12.

In the example of Fig. 8, if it is assumed that the time point of the determination of satisfaction of the return control start condition is not time t2 and is time t2' later than time t2, the virtual shift progress rate PRSat increases from time t2' toward one as indicated by a broken line L13. In this case, the virtual engine rotation speed NSe decreases as indicated by a broken line L14 in accordance with the virtual shift progress rate PRSat and the target engine torque Tet accordingly increases from time t2' as indicated by a broken line L15 in accordance with the decreasing virtual engine rotation speed NSe. If the target engine torque Tet changes in this way during the upshift, the rise of the actual engine torque Te is delayed relative to the end of the upshift (time t4) as indicated by a solid line L16 due to the response delay in the supercharging, which may cause a driver to temporarily feel insufficiency of drive force. In other words, since time t2 is set as a time point earlier than time t2' in this example, the upshift of the automatic transmission 12 is performed without causing a driver to feel insufficiency of drive force due to the response delay in the supercharging. Additionally, although if variation in the actual engine torque Te becomes larger at the end of the shift of the automatic transmission 12 due to the response delay in the supercharging, this makes a shift shock larger, the shift shock is prevented from becoming larger in this way.

In this example, the electronic control device 52 makes the temporal rise rate of the engine torque Te larger in the end period (end stage) of the inertia phase of the upshift of the automatic transmission 12 as depicted in the time chart of Fig. 8. Specifically, the electronic control device 52 makes the temporal rise rate of the engine torque Te larger from the predetermined time point PTMup during the upshift. When the engine 10 is in the operation state making a response delay in supercharging by the supercharger 54 larger, the electronic control device 52 makes the predetermined time point PTMup earlier. Therefore, since the engine torque Te during the upshift is reduced as compared to the case that the engine torque Te is linearly changed during the upshift from the level at the start of the upshift to the level at the end of the upshift, the preferred upshift can be realized in a short time. Since the predetermined time point PTMup is made earlier depending on the operation state of the engine 10, the insufficiency of the engine torque Te hardly occurs due to the response delay in the supercharging at the end of the upshift, which enables suppression of a feeling of insufficiency of drive force that may occur in a driver. The shift shock due to the response delay in the supercharging is more easily prevented.

According to this example, as indicated by the time chart of Fig. 8, the electronic control device 52 uses the virtual shift progress rate PRSat during an upshift of the automatic transmission 12 to assume that the upshift does not progress until the predetermined time point PTMup and that the upshift starts progressing from the predetermined time point PTMup, and raises the engine torque Te from the predetermined time point PTMup in accordance with the assumed progress of the upshift. Therefore, the electronic control device 52 can easily reduce the engine torque Te during the upshift and can increase the engine torque Te to the level at the end of the upshift by providing the control of the engine torque Te in accordance with the assumed progress of the upshift.

According to this example, the electronic control device 52 controls the engine torque Te during the upshift based on the virtual shift progress rate PRSat virtually indicative of a shift progress rate of the upshift of the automatic transmission 12. The electronic control device 52 maintains the virtual shift progress rate PRSat at the value corresponding to the start of the upshift (PRSat=0) until the predetermined time point PTMup during the upshift and increases the virtual shift progress rate PRSat from the predetermined time point PTMup toward the value corresponding to the end of the upshift (PRSat=1) (see Fig. 8), thereby assuming that the upshift does not progress until the predetermined time point PTMup and that the upshift starts progressing from the predetermined time point PTMup. Therefore, the electronic control device 52 can reduce the engine torque Te during the upshift by using the virtual shift progress rate PRSat with the same control as the control of simply increasing the engine torque Te as the upshift progresses. Therefore, the reduction in a control load can be achieved.

According to this example, as depicted in the time chart of Fig. 8, the virtual shift progress rate calculating means 104 included in the electronic control device 52 causes the virtual shift progress rate PRSat to reach the value (=1) corresponding to the end of the upshift before the end of the upshift of the automatic transmission 12, i.e., before the actual shift progress rate PRat reaches one. Therefore, since the engine torque Te is controlled on the assumption that the upshift is completed before the actual end of the upshift (time t4 of Fig. 8), the insufficiency of drive force can more easily be prevented from occurring at the end of the upshift due to a response delay in supercharging by the supercharger 54.

According to this example, as depicted in the time chart of Fig. 8, the target engine torque deciding means 108 included in the electronic control device 52 temporarily makes the target engine torque Tet larger as compared to the end of the upshift (time t4) in a portion of the period from the predetermined time point PTMup until the end of the upshift (from time t2 to time t4) during the upshift of the automatic transmission 12. Therefore, the insufficiency of drive force can more easily be prevented from occurring at the end of the upshift due to the response delay in the supercharging.

Although the example of the present invention has been described in detail with reference to the drawings, this is merely an embodiment and the present invention can be implemented in variously modified and improved forms based on the knowledge of those skilled in the art.

For example, although the engine rotation speed Ne and the atmospheric pressure Pair at the start of the shift of the automatic transmission 12 are used when a response delay in supercharging by the supercharger 54 is obtained from the relationship depicted in Fig. 4 in the example, either the engine rotation speed Ne or the atmospheric pressure Pair may be used or another physical amount indicative of the operation state of the engine 10 may be used. Although the engine rotation speed Ne and the atmospheric pressure Pair for obtaining the response delay in the supercharging are values at the start of the shift, the start of the shift is merely exemplification and the values may not be those at the start of the shift.

Although the change in the target engine torque Tet indicated by the broken lines L07 and L09 of the time chart of Fig. 8 has an inclination switched from decrease to increase at time t2 in the example, if the temporal rise rate of the target engine torque Tet becomes larger from time t2, the target engine torque Tet indicated by the broken line L07 does not need to decrease. In other words, if the temporal rise rate of the target engine torque Tet indicated by the broken line L07 is smaller than the temporal rise rate of the target engine torque Tet indicated by the broken line L09, the target engine torque Tet (broken line L07) before time t2 may increase over time or may be a constant value.

Although the virtual shift progress rate PRSat is used in the time chart of Fig. 8 to make the temporal rise rate of the engine torque Te larger from the predetermined time point PTMup in the example, the usage of the virtual shift progress rate PRSat is not essential. For example, a parameter other than the virtual shift progress rate PRSat may be used. Although the virtual engine rotation speed NSe is calculated in the course of deciding the target engine torque Tet during an upshift based on the virtual shift progress rate PRSat, the target engine torque Tet during the upshift may be decided without calculating the virtual engine rotation speed NSe.

Although the return control start condition is satisfied when the actual shift progress rate PRat is equal to or greater than the actual shift progress rate determination value PRlat in the example, the return control start condition may be defined based on a parameter other than the actual shift progress rate PRat and, for example, the return control start condition may be satisfied when an elapsed time from the start of the shift of the automatic transmission 12 becomes equal to or greater than a predetermined elapsed time threshold value. In this case, deciding the return control start condition is to decide the elapsed time threshold value.

Although the exhaust bypass path 66 and the waist gate valve 68 are disposed as depicted in Fig. 1 in the example, the vehicle 6 may be a vehicle without the exhaust bypass path 66 and the waist gate valve 68.

Although the actual shift progress rate PRat of the automatic transmission 12 is calculated from Equation (1) in the example, Equation (1) is merely exemplification and the actual shift progress rate PRat may be calculated from another calculation method. For example, the actual shift progress rate PRat may be calculated based on an elapsed time from the start of the shift etc.

Although the virtual engine rotation speed NSe is calculated from Equation (2) in the example, Equation (2) is merely exemplification and the virtual engine rotation speed NSe may be calculated from another calculation method as long as the calculation is based on the virtual shift progress rate PRSat.

Although both the virtual shift progress rate PRSat and the actual shift progress rate PRat of the automatic transmission 12 are zero at the start of a shift and become one at the end of the shift in the example, the progress rates may not change between zero and one in this way.

Although the time chart of Fig. 8 is an example when the automatic transmission 12 performs the clutch-to-clutch shift in the example, it is not essential that a shift of the automatic transmission 12 is the clutch-to-clutch shift.

Although the automatic transmission 12 is a stepped transmission performing the clutch-to-clutch shift in the example, the automatic transmission 12 may be a continuously variable transmission (CVT) of a belt type etc. For example, the continuously variable transmission may perform a so-called sequential shift changing a shift ratio in stages, and the present invention is applicable even when the continuously variable transmission performs such a sequential shift.

Although the vehicle 6 does not include an electric motor as a drive force source for running in the example, the vehicle 6 may be a hybrid vehicle including an electric motor for running.

Although the vehicle 6 includes the torque converter 14 as depicted in Fig. 1 in the example, the torque converter 14 is not essential.

Although the supercharger 54 is an exhaust turbine supercharger in the example, the supercharger 54 may be a mechanical type supercharger, i.e., mechanical supercharger, rotationally driven by rotation of the output shaft 13 of the engine 10. If the supercharger 54 is a mechanical supercharger, the exhaust bypass path 66 and the waist gate valve 68 are not disposed, while a clutch is disposed that selectively couples the output shaft 13 of the engine 10 and a rotation shaft of the mechanical supercharger.

NOMENCLATURE OF ELEMENTS

6: vehicle
7: vehicle drive device
10: engine
12: automatic transmission
38: drive wheels
52: electronic control device (control device)
54: supercharger

**Claims**

1. A control device of a vehicle drive device including an engine, a supercharger pressurizing intake air of the engine, and an automatic transmission outputting power of the engine to drive wheels, wherein
the control device makes a temporal rise rate of an engine torque larger from a predetermined time point during an upshift of the automatic transmission, wherein
the upshift is a shift with the engine torque after end of the upshift made larger than that before start of the upshift, and wherein
the predetermined time point is made earlier when a response delay of supercharging by the supercharger becomes larger.

2. The control device of a vehicle drive device of claim 1, wherein
during the upshift the engine torque is raised in accordance with an assumed progress of the upshift from the predetermined time point and wherein the assumed progress of the upshift is an assumption that the upshift does not progress until the predetermined time point and that the upshift starts progressing from the predetermined time point.

3. The control device of a vehicle drive device of claim 2, wherein
the control device controls the engine torque during the upshift based on a virtual shift progress rate virtually indicative of a shift progress rate of the upshift, wherein
the control device maintains the virtual shift progress rate at a value corresponding to the start of the upshift until the predetermined time point during the upshift and increases the virtual shift progress rate from the predetermined time point toward a value corresponding to the end of the upshift, thereby assuming that the upshift does not progress until the predetermined time point and that the upshift starts progressing from the predetermined time point.

4. The control device of a vehicle drive device of claim 3, wherein
the control device causes the virtual shift progress rate to reach the value corresponding to the end of the upshift before the end of the upshift.

# FIG.1

# FIG.2

| | C1 | C2 | B1 | B2 | B3 | F1 |
|---|---|---|---|---|---|---|
| 1st | ○ | | | ◎ | | △ |
| 2nd | ○ | | ○ | | | |
| 3rd | ○ | | | | ○ | |
| 4th | ○ | ○ | | | | |
| 5th | | ○ | | | ○ | |
| 6th | | ○ | ○ | | | |
| R | | | | ○ | ○ | |
| N | | | | | | |

◎ ACTUATED DURING ENGINE BRAKE

△ ACTUATED ONLY DURING DRIVE

EP 2 789 513 A1

# FIG.3

15

# FIG.4

# FIG.5

# FIG.6

```
                    ( START )
                        │
        SA1             ▼
   No        ◇ DURING UPSHIFT ? ◇
  ◄──────────                        
                        │ Yes
        SA2             ▼
   ┌──────────────────────────┐
   │ DECIDE RETURN CONTROL     │
   │ START CONDITION           │
   └──────────────────────────┘
                        │
        SA3             ▼
   No        ◇ INERTIA PHASE IS STARTED ? ◇
  ◄──────────
                        │ Yes
        SA4             ▼
   ◇ TORQUE-UP RANGE IN WHICH TORQUE IS INCREASED ◇   No
     AFTER SHIFT AS COMPARED TO BEFORE SHIFT ?  ──────────►
                        │ Yes
        SA5             ▼                        SA9
   ┌──────────────────────────┐        ┌──────────────────────────┐
   │ RETAIN VIRTUAL ENGINE     │        │ CALCULATE TARGET ENGINE   │
   │ ROTATION SPEED FOR TARGET │        │ TORQUE DURING SHIFT BASED │
   │ ENGINE TORQUE CALCULATION │        │ ON ACTUAL ENGINE ROTATION │
   │ (ROTATION SPEED           │        │ SPEED                     │
   │ CORRESPONDING TO          │        └──────────────────────────┘
   │ PRE-SHIFT GEAR STAGE)     │
   └──────────────────────────┘
        SA6             ▼
   ┌──────────────────────────┐
   │ CALCULATE TARGET ENGINE   │
   │ TORQUE DURING SHIFT BASED │
   │ ON VIRTUAL ENGINE         │
   │ ROTATION SPEED            │
   └──────────────────────────┘
        SA7             ▼
   No        ◇ RETURN CONTROL START CONDITION IS SATISFIED ? ◇
  ◄──────────
                        │ Yes
        SA8             ▼
   ┌──────────────────────────┐
   │ RETURN CONTROL            │
   └──────────────────────────┘
                        │
                        ▼
                    ( RETURN )
```

# FIG.7

RETURN CONTROL

SB1
INCREASE VIRTUAL
SHIFT PROGRESS RATE

SB2
VIRTUAL SHIFT
PROGRESS RATE > 1 ?
— Yes

No

SB3
VIRTUAL SHIFT
PROGRESS RATE = 1

SB4
CALCULATE VIRTUAL ENGINE
ROTATION SPEED BASED ON
VIRTUAL SHIFT PROGRESS RATE

SB5
CALCULATE TARGET ENGINE TORQUE
DURING SHIFT BASED ON VIRTUAL
ENGINE ROTATION SPEED

SB6
No — SHIFT COMPLETED ?

Yes

RETURN

FIG.8

## INTERNATIONAL SEARCH REPORT

| International application No. |
|---|
| PCT/JP2011/078620 |

A. CLASSIFICATION OF SUBJECT MATTER

*B60W10/04*(2006.01)i, *B60W10/06*(2006.01)i, *B60W10/10*(2012.01)i, *B60W10/11*
(2012.01)i, *F02D23/00*(2006.01)i, *F02D29/00*(2006.01)i, *F02D45/00*(2006.01)i

According to International Patent Classification (IPC) or to both national classification and IPC

B. FIELDS SEARCHED

Minimum documentation searched (classification system followed by classification symbols)

B60W10/04, B60W10/06, B60W10/10, B60W10/11, F02D23/00, F02D29/00,
F02D45/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-176266 A  (Toyota Motor Corp.),<br>12 July 2007 (12.07.2007),<br>paragraphs [0006], [0023] to [0026], [0033] to<br>[0035]; fig. 10<br>& US 2007/0149354 A1     & CN 1991213 A | 1<br>2-4 |
| Y<br>A | JP 61-169623 A  (Mazda Motor Corp.),<br>31 July 1986 (31.07.1986),<br>page 2, upper left column, line 7 to upper<br>right column, line 18; page 5, lower left<br>column, line 9 to lower right column, line 5<br>(Family: none) | 1<br>2-4 |

| ☒ Further documents are listed in the continuation of Box C. | ☐ See patent family annex. |
|---|---|

| | |
|---|---|
| \* Special categories of cited documents:<br>"A" document defining the general state of the art which is not considered<br>to be of particular relevance<br>"E" earlier application or patent but published on or after the international<br>filing date<br>"L" document which may throw doubts on priority claim(s) or which is<br>cited to establish the publication date of another citation or other<br>special reason (as specified)<br>"O" document referring to an oral disclosure, use, exhibition or other means<br>"P" document published prior to the international filing date but later than<br>the priority date claimed | "T" later document published after the international filing date or priority<br>date and not in conflict with the application but cited to understand<br>the principle or theory underlying the invention<br>"X" document of particular relevance; the claimed invention cannot be<br>considered novel or cannot be considered to involve an inventive<br>step when the document is taken alone<br>"Y" document of particular relevance; the claimed invention cannot be<br>considered to involve an inventive step when the document is<br>combined with one or more other such documents, such combination<br>being obvious to a person skilled in the art<br>"&" document member of the same patent family |

| Date of the actual completion of the international search | Date of mailing of the international search report |
|---|---|
| 17 January, 2012 (17.01.12) | 31 January, 2012 (31.01.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/078620

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-500944 A  (Eaton Corp.), 13 January 2005 (13.01.2005), abstract; paragraphs [0006], [0007] & US 2003/0060328 A1     & WO 03/018974 A1 & CN 1547643 A | 1-4 |
| A | JP 07-257237 A  (Toyota Motor Corp.), 09 October 1995 (09.10.1995), paragraphs [0004] to [0008] (Family: none) | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007176266 A
- JP 5280632 A
- JP 62253962 A
- JP 2007186098 A